(19) Europäisches Patentamt European Patent Office Office européen des brevets

(11) **EP 4 647 914 A1**

(12) **EUROPEAN PATENT APPLICATION**
published in accordance with Art. 153(4) EPC

(43) Date of publication:
**12.11.2025 Bulletin 2025/46**

(21) Application number: **24809980.6**

(22) Date of filing: **23.02.2024**

(51) International Patent Classification (IPC):
**G06F 9/50** (2006.01)

(52) Cooperative Patent Classification (CPC):
**G06F 9/50**

(86) International application number:
**PCT/CN2024/078230**

(87) International publication number:
**WO 2024/239731 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.05.2023 CN 202310603723**

(71) Applicant: **Huawei Technologies Co., Ltd.**
**Shenzhen, Guangdong 518129 (CN)**

(72) Inventors:
• **ZHANG, Shuo**
  **Shenzhen, Guangdong 518129 (CN)**
• **LI, Ming**
  **Shenzhen, Guangdong 518129 (CN)**
• **CHENG, Jian**
  **Shenzhen, Guangdong 518129 (CN)**
• **LIN, Shengwang**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **FREQUENCY MODULATION METHOD AND APPARATUS AND ELECTRONIC DEVICE**

(57) Embodiments of this application provide a frequency scaling method and apparatus, and an electronic device. The frequency scaling method includes: in response to a first operation of a user, determining a frequency scaling frequency based on a first historical load sequence, where the first historical load sequence is a historical load sequence obtained by latest statistics collection in M historical load sequences, and M is a positive integer greater than or equal to 1; determining a frequency scaling period based on a first power consumption budget and the frequency scaling frequency, where the first power consumption budget is a power consumption budget that is obtained based on a temperature rise prediction and that corresponds to the first operation; and performing frequency scaling based on the frequency scaling period and the frequency scaling frequency. According to the frequency scaling method and apparatus, and the electronic device, the frequency scaling period can be dynamically adjusted, to avoid undersupply and oversupply. In addition, the frequency scaling frequency is determined based on a load sequence obtained by latest statistics collection in a same scenario, so that a frequency supply can respond to a load change in a timely manner, to achieve a balance between performance and power consumption.

FIG. 8

## Description

This application claims priority to Chinese Patent Application No. 202310603723.X, filed with the China National Intellectual Property Administration on May 25, 2023 and entitled "FREQUENCY SCALING METHOD AND APPARATUS, AND ELECTRONIC DEVICE", which is incorporated herein by reference in its entirety.

## TECHNICAL FIELD

Embodiments of this application relate to the frequency scaling field, and more specifically, to a frequency scaling method and apparatus, and an electronic device.

## BACKGROUND

With popularization of intelligent devices, a user has increasingly high requirements on response efficiency, completion efficiency, and stability of operating an electronic device. Although a current frequency scaling solution can implement quick response to a task, high power consumption overheads are also caused.

Therefore, a frequency scaling method needs to be urgently provided, to implement quick response to a task and also control power consumption at a low level.

## SUMMARY

This application provides a frequency scaling method and apparatus, and an electronic device. According to the frequency scaling method and apparatus, and the electronic device, a frequency scaling period can be dynamically adjusted, to avoid undersupply and oversupply. In addition, a frequency scaling frequency is determined based on a load sequence obtained by latest statistics collection in a same scenario, so that a frequency supply can respond to a load change in a timely manner, to achieve a balance between performance and power consumption.

According to a first aspect, a frequency scaling method is provided. The method includes: in response to a first operation of a user, determining a frequency scaling frequency based on a first historical load sequence, where the first historical load sequence is a historical load sequence obtained by latest statistics collection in M historical load sequences, and M is a positive integer greater than or equal to 1; determining a frequency scaling period based on a first power consumption budget and the frequency scaling frequency, where the first power consumption budget is a power consumption budget that is obtained based on a temperature rise prediction and that corresponds to the first operation; and performing frequency scaling based on the frequency scaling period and the frequency scaling frequency.

Optionally, the first operation includes any one of an application start operation, a tap operation, a swipe operation, a window switching operation, and a code scanning operation.

Optionally, the M historical load sequences are arranged in a first-in first-out order. The $1^{st}$ historical load sequence (a historical load sequence obtained by first statistics collection) in the M historical load sequences first enters a queue, and the $M^{th}$ historical load sequence (a historical load sequence obtained by latest statistics collection) in the M historical load sequences last enters the queue. In other words, the foregoing first historical load sequence may also be interpreted as the $M^{th}$ historical load sequence in the M historical load sequences.

Optionally, a method for obtaining the first power consumption budget based on the temperature rise prediction may be: calculating a target total current of a current device, where a value obtained by multiplying the target total current by 3.8 V is the first power consumption budget.

In this embodiment of this application, the frequency scaling period is determined based on a latest historical load sequence corresponding to a same scenario and a power consumption budget of the current scenario, so that the frequency scaling period can be dynamically adjusted, to avoid undersupply and oversupply, that is, avoid a power consumption waste. In addition, in the method, the frequency scaling frequency is determined based on a load sequence obtained by latest statistics collection in the current scenario, so that a frequency supply can respond to a load change in a timely manner, to achieve an effect of "rapid scaling up and down", and achieve a balance between performance and power consumption.

With reference to the first aspect, in a possible implementation, the method further includes: in response to the first operation of the user, performing resource reservation based on the M historical load sequences.

In this embodiment of this application, a risk of a total high load can be identified in advance based on a historical load sequence, and resource reservation can be performed, so that undersupply of resources caused by the total high load in a frequency scaling process can be reduced.

With reference to the first aspect, in a possible implementation, the performing resource reservation based on the M historical load sequences includes: determining a first average value based on the M historical load sequences, where the first average value is an average value of M×N load samples included in the M historical load sequences; and

performing background cleanup until a sum of the first average value and a current CPU load is less than 100%, that is, completing resource reservation.

In this embodiment of this application, a risk of a total high load can be identified in advance based on a historical load sequence, and resource reservation can be performed, so that undersupply of resources caused by the total high load in a frequency scaling process can be reduced.

With reference to the first aspect, in a possible implementation, the performing resource reservation based on the M historical load sequences includes: determining a largest value in M×N load samples included in the M historical load sequences; and performing background cleanup until a sum of the largest value and a current CPU load is less than 100%, that is, completing resource reservation.

In this embodiment of this application, a risk of a total high load can be identified in advance based on a historical load sequence, and resource reservation can be performed, so that undersupply of resources caused by the total high load can be reduced. In addition, in the method, resource reservation is performed based on the largest value in the plurality of historical load samples, so that more sufficient resources can be reserved, and undersupply of resources caused by the total high load in the frequency scaling process can be avoided to a greater extent.

With reference to the first aspect, in a possible implementation, the method further includes: collecting statistics on a first load sequence corresponding to the first operation, where a load statistics period of the first load sequence is 4 milliseconds.

In this embodiment of this application, the load sequence corresponding to the first operation can be synchronously obtained by statistics collection in a process in which the first operation occurs, so that the load sequence obtained by statistics collection is updated to the M historical load sequences in a timely manner after the first operation ends, for use in a subsequent frequency scaling process. In addition, a small load statistics period is used in a process of collecting statistics on the load sequence, so that a subsequently determined frequency scaling period can meet a performance requirement.

With reference to the first aspect, in a possible implementation, the method further includes: updating the M historical load sequences based on the first load sequence.

In this embodiment of this application, when the user performs a new scenario operation, a load sequence corresponding to the operation is recorded in a timely manner, and the recorded load sequence is updated to the M historical load sequences in a timely manner after the operation ends, to ensure that the M historical load sequences are maintained as load sequences obtained by latest M times of statistics collection. In this way, resources reserved based on the M historical load sequences are more appropriate, and a frequency scaling period and a frequency scaling frequency determined based on the historical load sequences are more accurate. Therefore, power consumption overheads are further reduced while accurate frequency scaling is implemented.

With reference to the first aspect, in a possible implementation, the updating the M historical load sequences based on the first load sequence includes: removing, in a first-in first-out manner, a historical load sequence ranked 1st from the M historical load sequences, and using the first load sequence as a historical load sequence ranked Mth.

In this embodiment of this application, a first-in first-out form is used in an update process of the M historical load sequences, so that the Mth historical load sequence in the M historical load sequences can always be a load sequence obtained by latest statistics collection. In this way, when the frequency scaling period and the frequency scaling frequency are determined by using the historical load sequences obtained by recent statistics collection, the load sequence obtained by latest statistics collection can be quickly and accurately invoked, and frequency scaling efficiency and accuracy can be improved to some extent.

With reference to the first aspect, in a possible implementation, the determining a frequency scaling period based on a first power consumption budget and the frequency scaling frequency includes: determining the first power consumption budget; determining a first difference by subtracting current total power consumption from the first power consumption budget; and when the first difference is less than or equal to 0, determining the frequency scaling period as 20 milliseconds; or when the first difference is greater than 0, determining, based on the frequency scaling frequency, a plurality of power consumption values that are in one-to-one correspondence with a plurality of load statistics periods, where the plurality of load statistics periods include 4 milliseconds, 8 milliseconds, 12 milliseconds, 16 milliseconds, and 20 milliseconds; and determining a load statistics period corresponding to a power consumption value having a highest matching degree with the first difference in the plurality of power consumption values that are in one-to-one correspondence with the plurality of load statistics periods as the frequency scaling period.

Current total power consumption=Current total current×3.8 V.

In this embodiment of this application, the frequency scaling period is determined based on a latest historical load sequence corresponding to a same scenario and a power consumption budget (obtained based on the temperature rise prediction) of the current scenario, and the temperature rise prediction is included in a frequency scaling basis, so that the frequency scaling period can be dynamically and accurately adjusted, to avoid undersupply and oversupply, that is, avoid a power consumption waste.

With reference to the first aspect, in a possible implementation, the determining, based on the frequency scaling frequency, a plurality of power consumption values that are in one-to-one correspondence with a plurality of load statistics periods includes: determining, based on an energy efficiency lookup table, N power consumption values that are in one-to-one correspondence with N frequencies, where the frequency scaling frequency includes the N frequencies, the N frequencies are in one-to-one correspondence with N load samples included in the first historical load sequence, and a value of N is obtained by dividing duration of an operation corresponding to the first historical load sequence by a statistics period of the first historical load sequence; and determining, based on the N power consumption values that are in one-to-one correspondence with the N frequencies, the plurality of power consumption values that are in one-to-one correspondence with the plurality of load statistics periods.

According to a second aspect, a frequency scaling apparatus is provided. The apparatus includes: a determining unit, configured to: in response to a first operation of a user, determine a frequency scaling frequency based on a first historical load sequence, where the first historical load sequence is a historical load sequence obtained by latest statistics collection in M historical load sequences, and M is a positive integer greater than or equal to 1, and the determining unit is further configured to determine a frequency scaling period based on a first power consumption budget and the frequency scaling frequency, where the first power consumption budget is a power consumption budget that is obtained based on a temperature rise prediction and that corresponds to the first operation; and a frequency scaling unit, configured to perform frequency scaling based on the frequency scaling period and the frequency scaling frequency.

Optionally, the first operation includes any one of an application start operation, a tap operation, a swipe operation, a window switching operation, and a code scanning operation.

Optionally, the M historical load sequences are arranged in a first-in first-out order. The 1st historical load sequence (a historical load sequence obtained by first statistics collection) in the M historical load sequences first enters a queue, and the Mth historical load sequence (a historical load sequence obtained by latest statistics collection) in the M historical load sequences last enters the queue. In other words, the foregoing historical load sequence may also be interpreted as the Mth historical load sequence in the M historical load sequences.

Optionally, a method for obtaining the first power consumption budget based on the temperature rise prediction may be: calculating a target total current of a current device, where a value obtained by multiplying the target total current by 3.8 V is the first power consumption budget.

In this embodiment of this application, the frequency scaling period is determined based on a latest historical load sequence corresponding to a same scenario and a power consumption budget of the current scenario, so that the frequency scaling period can be dynamically adjusted, to avoid undersupply and oversupply, that is, avoid a power consumption waste. In addition, in the method, the frequency scaling frequency is determined based on a load sequence obtained by latest statistics collection in the current scenario, so that a frequency supply can respond to a load change in a timely manner, to achieve an effect of "rapid scaling up and down", and achieve a balance between performance and power consumption.

With reference to the second aspect, in a possible implementation, the apparatus further includes a resource reservation unit, configured to: in response to the first operation of the user, perform resource reservation based on the M historical load sequences.

In this embodiment of this application, a risk of a total high load can be identified in advance based on a historical load sequence, and resource reservation can be performed, so that undersupply of resources caused by the total high load in a frequency scaling process can be reduced.

With reference to the second aspect, in a possible implementation, the resource reservation unit is specifically configured to: determine a first average value based on the M historical load sequences, where the first average value is an average value of $M \times N$ load samples included in the M historical load sequences; and perform background cleanup until a sum of the first average value and a current CPU load is less than 100%, that is, complete resource reservation.

In this embodiment of this application, a risk of a total high load can be identified in advance based on a historical load sequence, and resource reservation can be performed, so that undersupply of resources caused by the total high load in a frequency scaling process can be reduced.

With reference to the second aspect, in a possible implementation, the resource reservation unit is specifically configured to: determine a largest value in $M \times N$ load samples included in the M historical load sequences; and perform background cleanup until a sum of the largest value and a current CPU load is less than 100%, that is, complete resource reservation.

In this embodiment of this application, a risk of a total high load can be identified in advance based on a historical load sequence, and resource reservation can be performed, so that undersupply of resources caused by the total high load can be reduced. In addition, the apparatus can perform resource reservation based on the largest value in the plurality of historical load samples, so that more sufficient resources can be reserved, and undersupply of resources caused by the total high load in the frequency scaling process can be avoided to a greater extent.

With reference to the second aspect, in a possible implementation, the apparatus further includes: a load statistics collection unit, configured to collect statistics on a first load sequence corresponding to the first operation, where a load statistics period of the first load sequence is 4 milliseconds.

In this embodiment of this application, the load sequence corresponding to the first operation can be synchronously obtained by statistics collection in a process in which the first operation occurs, so that the load sequence obtained by statistics collection is updated to the M historical load sequences in a timely manner after the first operation ends, for use in a subsequent frequency scaling process. In addition, a small load statistics period is used in a process of collecting statistics on the load sequence, so that a subsequently determined frequency scaling period can meet a performance requirement.

With reference to the second aspect, in a possible implementation, the apparatus further includes an update unit, configured to update the M historical load sequences based on the first load sequence.

In this embodiment of this application, when the user performs a new scenario operation, a load sequence corresponding to the operation is recorded in a timely manner, and the recorded load sequence is updated to the M historical load sequences in a timely manner after the operation ends, to ensure that the M historical load sequences are maintained as load sequences obtained by latest M times of statistics collection. In this way, resources reserved based on the M historical load sequences are more appropriate, and a frequency scaling period and a frequency scaling frequency determined based on the historical load sequences are more accurate. Therefore, power consumption overheads are further reduced while accurate frequency scaling is implemented.

With reference to the second aspect, in a possible implementation, the update unit is specifically configured to: remove, in a first-in first-out manner, a historical load sequence ranked $1^{st}$ from the M historical load sequences, and use the first historical load sequence as a historical load sequence ranked $M^{th}$.

In this embodiment of this application, a first-in first-out form is used in an update process of the M historical load sequences, so that the $M^{th}$ historical load sequence in the M historical load sequences can always be a load sequence obtained by latest statistics collection. In this way, when the frequency scaling period and the frequency scaling frequency are determined by using the historical load sequences obtained by recent statistics collection, the load sequence obtained by latest statistics collection can be quickly and accurately invoked, and frequency scaling efficiency and accuracy can be improved to some extent.

With reference to the second aspect, in a possible implementation, the determining unit is specifically: determine the first power consumption budget; determine a first difference by subtracting current total power consumption from the first power consumption budget; and when the first difference is less than or equal to 0, determine the frequency scaling period as 20 milliseconds; or when the first difference is greater than 0, determine, based on the frequency scaling frequency, a plurality of power consumption values that are in one-to-one correspondence with a plurality of load statistics periods, where the plurality of load statistics periods include 4 milliseconds, 8 milliseconds, 12 milliseconds, 16 milliseconds, and 20 milliseconds; and determine a load statistics period corresponding to a power consumption value having a highest matching degree with the first difference in the plurality of power consumption values that are in one-to-one correspondence with the plurality of load statistics periods as the frequency scaling period.

Current total power consumption=Current total current$\times$3.8 V.

In this embodiment of this application, the frequency scaling period is determined based on a latest historical load sequence corresponding to a same scenario and a power consumption budget (obtained based on the temperature rise prediction) of the current scenario, and the temperature rise prediction is included in a frequency scaling basis, so that the frequency scaling period can be dynamically and accurately adjusted, to avoid undersupply and oversupply, that is, avoid a power consumption waste.

With reference to the second aspect, in a possible implementation, the determining unit is further specifically configured to: determine, based on an energy efficiency lookup table, N power consumption values that are in one-to-one correspondence with N frequencies, where the frequency scaling frequency includes the N frequencies, the N frequencies are in one-to-one correspondence with N load samples included in the first historical load sequence, and a value of N is obtained by dividing duration of an operation corresponding to the first historical load sequence by a statistics period of the first historical load sequence; and determine, based on the N power consumption values that are in one-to-one correspondence with the N frequencies, the plurality of power consumption values that are in one-to-one correspondence with the plurality of load statistics periods.

According to a third aspect, an electronic device is provided. The electronic device includes a memory and a processor. The memory is configured to store computer program code. The processor is configured to execute the computer program code stored in the memory, to implement the method according to any one of the first aspect or the possible implementations of the first aspect.

According to a fourth aspect, a computer-readable storage medium is provided. The computer-readable storage medium stores a computer program or instructions. When the computer program or the instructions are executed, the method according to any one of the first aspect or the possible implementations of the first aspect is implemented.

According to a fifth aspect, a chip is provided. The chip stores instructions, and when the instructions are run on a device, the chip is enabled to perform the method according to any one of the first aspect or the possible implementations of the first aspect.

## BRIEF DESCRIPTION OF DRAWINGS

FIG. 1 is a schematic flowchart of a frequency scaling method according to an embodiment of this application;

FIG. 2 is a diagram of entering a scheduler queue by a task according to an embodiment of this application;

FIG. 3 is a schematic flowchart of an existing frequency scaling method according to an embodiment of this application;

FIG. 4 is a diagram of code corresponding to a frequency scaling process according to an embodiment of this application;

FIG. 5 is a curve diagram of a load requirement (performance supply) that changes over time in a swipe scenario according to an embodiment of this application;

FIG. 6 is a schematic flowchart of another existing frequency scaling method according to an embodiment of this application;

FIG. 7 is a diagram of a method for obtaining N loads according to an embodiment of this application;

FIG. 8 is a schematic flowchart of a frequency scaling method according to an embodiment of this application;

FIG. 9 is a diagram of load sequences according to an embodiment of this application;

FIG. 10 is a schematic flowchart of another frequency scaling method according to an embodiment of this application;

FIG. 11 is a schematic flowchart of a resource reservation method according to an embodiment of this application;

FIG. 12 is a schematic flowchart of another resource reservation method according to an embodiment of this application;

FIG. 13 is a schematic flowchart of a frequency scaling period determining method according to an embodiment of this application;

FIG. 14 is a schematic flowchart of a method for calculating power consumption corresponding to a load statistics period according to an embodiment of this application;

FIG. 15 is a schematic flowchart of a method for updating M historical load sequences according to an embodiment of this application;

FIG. 16 is a diagram of effect comparison between a frequency scaling method provided in this application and an existing boost frequency scaling method according to an embodiment of this application;

FIG. 17 is a diagram of a system architecture corresponding to a frequency scaling method according to an embodiment of this application; and

FIG. 18 is a diagram of functional modules of a frequency scaling apparatus according to an embodiment of this application.

## DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means two or more than two.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

Terms used in the following embodiments are merely intended to describe specific embodiments, but are not intended to limit this application. As used in the specification and the appended claims of this application, the singular expressions "a/an", "one", "said", "the above", "the" and "this" are intended to also include such expressions as "one or more", unless otherwise clearly indicated in the context. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, the statements "an embodiment", "some embodiments", "another embodiment", "some other embodiments", and the like that appear in different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The technical solutions in embodiments of this application may be applied to systems such as Android, iOS, and HarmonyOS.

With popularization of intelligent devices, a user has increasingly high requirements on response efficiency, completion efficiency, and stability of operating an electronic device. Although a current frequency scaling solution can implement quick response to a task, high power consumption overheads are also caused.

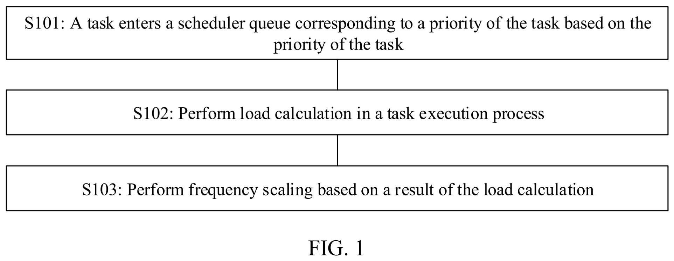

FIG. 1 is a schematic flowchart of a frequency scaling method 100 according to an embodiment of this application. As shown in FIG. 1, the method 100 includes the following steps.

S101: A task enters a scheduler queue corresponding to a priority of the task based on the priority of the task.

Different scheduler queues correspond to different scheduling policies.

S102: Perform load calculation in a task execution process.

Optionally, when the task starts to be executed, load calculation is performed according to a WALT (windows-assisted load tracking) or PELT (per entity load tracing) algorithm. A calculated load may be understood as an amount of resources required for executing the task, or may be understood as a quantity of instructions to be executed by the task per unit of time. Generally, a higher load requires a higher CPU frequency.

S103: Perform frequency scaling based on a result of the load calculation.

Optionally, a frequency of a CPU core that can meet a resource requirement of the task is determined based on the result of load calculation. If a current maximum CPU frequency cannot meet the resource requirement corresponding to task execution (that is, the current maximum CPU frequency is less than the resource requirement of the task, for example, the task is run on a CPU little core), the task is switched to a CPU middle core or a CPU big core that can provide the frequency, to achieve an objective of frequency scaling.

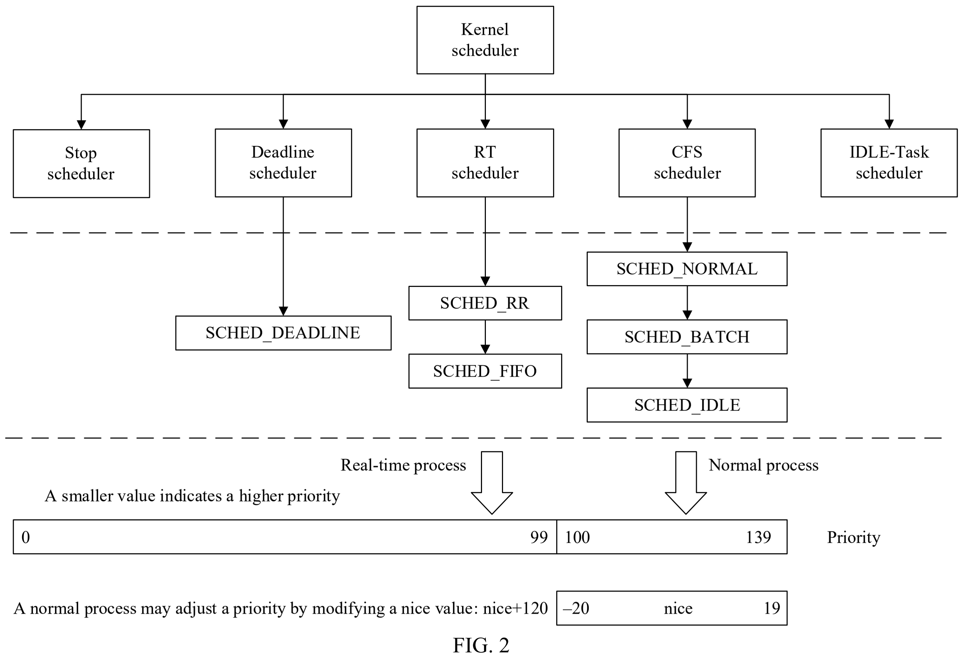

To understand step S101 more clearly, for example, FIG. 2 is a diagram of entering a scheduler queue by a task.

As shown in FIG. 2, the scheduler queue may include a stop scheduler, a deadline scheduler, a real-time (real-time, RT) scheduler, a completely fair (CFS) scheduler, and an idle-task (IDLE-Task) scheduler.

The stop scheduler is of a scheduling class with a highest priority, can preempt all other processes, and cannot be preempted by another process. The deadline scheduler can use a redblack tree to sort processes based on absolute deadlines, and select a smallest process for scheduling and running. The RT scheduler is configured to maintain a queue for each priority. The CFS scheduler uses a completely fair scheduling algorithm, and introduces a concept of virtual running time. The idle-task scheduler is configured to schedule and run an idle thread when no other process can be scheduled. Each CPU has an idle thread.

The stop scheduler and the idle-task scheduler are used only by a Linux kernel and cannot be selected by a user.

In an example, when the task enters a deadline scheduler queue, a scheduling policy corresponding to the deadline scheduler queue is a deadline process scheduling policy (SCHED_DEADLINE), so that the task (task) selects the deadline scheduler for scheduling and running.

In another example, when the task enters an RT scheduler queue, a scheduling policy corresponding to the RT scheduler queue is a real-time process scheduling policy (SCHED _RR) and a real-time process scheduling policy (SCHED_FIFO). The real-time process scheduling policy (SCHED_RR) is time slice round robin, and after a process exhausts a time slice, the process is added to a tail of a running queue corresponding to a priority, so that a CPU is allocated to another process with the same priority. The real-time process scheduling policy (SCHED_FIFO) is first-in first-out scheduling. There is no time slice, and if there is no higher priority, a process can only wait until the CPU is actively released by another process.

In still another example, when the task enters a CFS scheduler queue, the CFS scheduler queue corresponds to a normal process scheduling policy (SCHED_NORMAL), a normal process scheduling policy (SCHED_BATCH), and a normal process scheduling policy (SCHED_IDLE). The normal process scheduling policy (SCHED_NORMAL) is used to enable the task to select a CFS scheduler for scheduling and running. The normal process scheduling policy (SCHED_BATCH) is batch processing, and is used to enable the task to select a CFS scheduler for scheduling and running. The normal process scheduling policy (SCHED_IDLE) is used to enable the task to select, with a lowest priority, the CFS scheduler for scheduling and running.

The RT scheduler corresponds to a real-time process, and the CFS scheduler corresponds to a normal process. A smaller value of a priority corresponding to the scheduler queues indicates a higher priority. In addition, Value of a priority=Nice value+120. The normal process may adjust a priority by modifying the nice value.

Further, for step S103, there are two specific frequency scaling methods in the current technology.

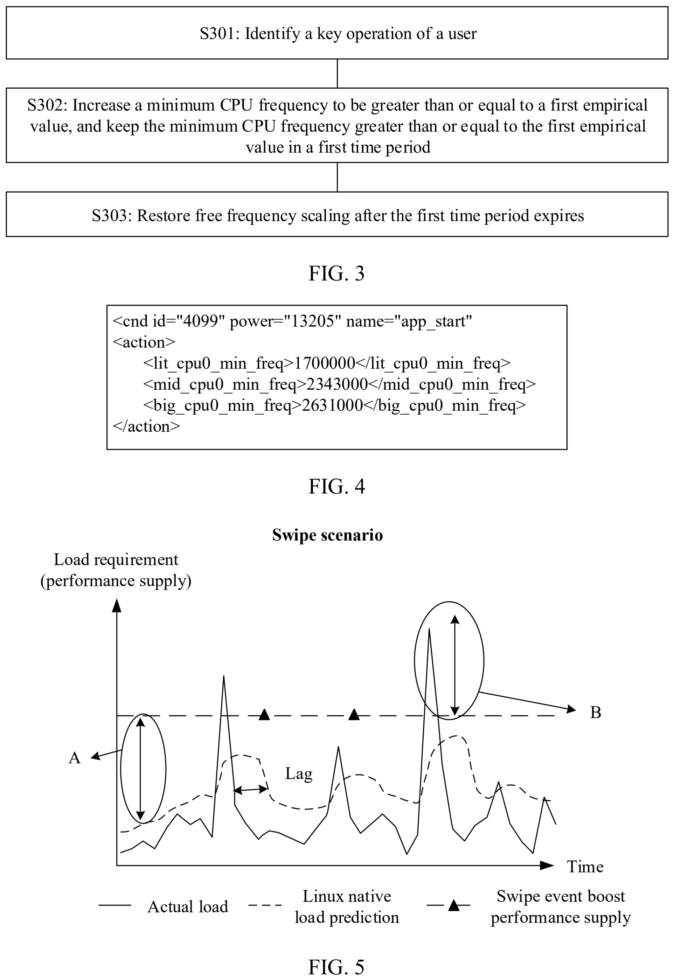

FIG. 3 is a schematic flowchart of an existing frequency scaling method 300 according to an embodiment of this application. As shown in FIG. 3, the method 300 includes the following steps.

S301: Identify a first operation of a user.

The first operation of the user is an operation that the user performs on an electronic device to trigger execution of a task.

Optionally, the first operation may be any one of an application start operation, a tap operation, a swipe operation, and a window switching operation. In addition, the first operation may be another operation that triggers execution of a task, for example, an unlock operation, an edit operation, or a back operation. This is not limited in this application.

Optionally, a terminal device installed with an Android system has a boost frequency scaling mechanism. In the frequency scaling mechanism, modules such as an application manager service (application manager service, AMS) and a window manager service (windows manager service, WMS) at a framework layer of the Android system identify the first operation of the user.

S302: Increase a minimum CPU frequency to be greater than or equal to a first empirical value, and keep the minimum CPU frequency greater than or equal to the first empirical value in a first time period.

After identifying the first operation of the user, the electronic device quickly increases a CPU frequency in a short time period. A higher CPU frequency indicates a higher task execution speed, so that the task corresponding to the first operation can be quickly completed.

The first empirical value is a frequency that can meet a resource requirement of the task.

S303: Restore free frequency scaling after the first time period expires.

To understand step S302 more clearly, for example, FIG. 4 is a diagram of code corresponding to a frequency scaling process according to an embodiment of this application.

In FIG. 4, the code line <cnd id="4099" power="13205" name="app_start" is related code for starting an application, where "4099" and "13205" are numbers of related scenarios for starting the application.

```
<action>
<lit_cpu0_min_freq>1700000</lit_cpu0_min_freq>
<mid_cpu0_min_freq>2343000</mid_cpu0_min_freq>
<big_cpu0_min_freq>2631000</big_cpu0_min_freq>
</action>
```

In the foregoing action code,
the code line "<lit_cpu0_min_freq>1700000</lit_cpu0_min_freq>" indicates to increase a minimum frequency of a CPU little core to 1700000.

The code line "<mid_cpu0_min_freq>2343000</mid_cpu0_min_freq>" indicates to increase a minimum frequency of a CPU middle core to 2343000.

The code line "<big_cpu0_min-freq>2631000</big_cpu0_min-freq>" indicates to increase a minimum frequency of a CPU big core to 2631000.

As shown in FIG. 4, the boost mechanism increases the minimum frequency of the CPU in a short time period, that is, lit_cpu0_min_freq, mid_cpu0_min_freq and big_cpu0_min_freq.

For example, the first operation of the user is a swipe operation. For example, FIG. 5 is a curve diagram of a load requirement (performance supply) that changes over time in a swipe scenario according to an embodiment of this application.

As shown in FIG. 5, a solid curve represents a curve diagram of an actual load requirement that changes over time, a dashed curve represents a curve diagram of a Linux native load prediction that changes over time, and a dashed line marked with a triangle represents a swipe event boost performance supply. It can be learned from FIG. 5 that, for a low-load scenario such as a video scenario, the swipe event boost performance supply curve is higher than the actual load curve (as shown in an area A in FIG. 5). The boost mechanism increases the CPU frequency too high, resulting in oversupply of frequency and a waste of power consumption. In the scenario of a sudden high load with a low probability, the swipe event boost performance supply curve is lower than the actual load curve (as shown in an area B in FIG. 5). The boost mechanism does not increase the CPU frequency in a timely manner, resulting in undersupply. As a result, a task delay cannot be met, or frame loss and frame freezing occur. In addition, it can be learned from FIG. 5 that the Linux native load prediction curve has an obvious lag compared with the actual load curve, and this also causes excessive CPU frequency increase or untimely CPU frequency increase.

An Android system kernel is usually obtained by reconstructing and optimizing a Linux kernel. However, in the foregoing scenario in which the user performs the first operation, a native free frequency scaling policy of the Linux kernel cannot achieve an objective of quickly increasing a CPU frequency based on a task load. In this method, the boost policy is used. After the foregoing scenario is identified, the minimum CPU frequency can be immediately increased to an empirical value, and free frequency scaling is restored after a time period (or at the same time).

However, such a one-size-fits-all frequency increase method leads to oversupply of frequency, and causes a waste of power consumption. In addition, undersupply also exists in a subsequent free frequency scaling phase, and this causes a problem that a task delay cannot be met or a frame loss and frame freezing occur.

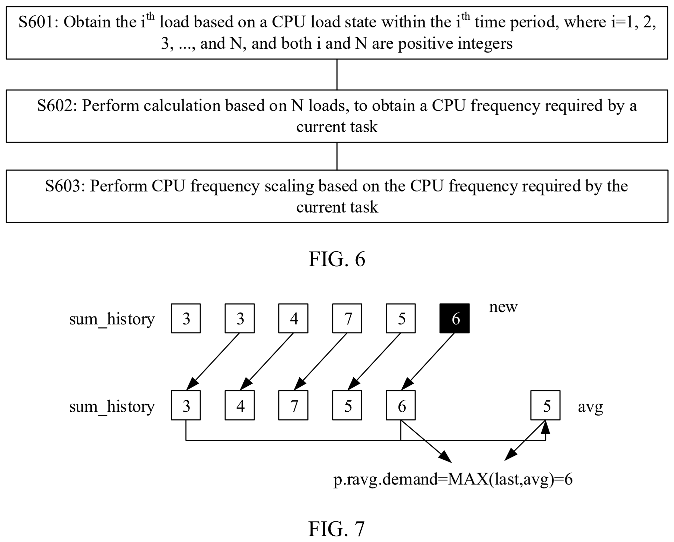

FIG. 6 is a schematic flowchart of another existing frequency scaling method 600 according to an embodiment of this application. As shown in FIG. 6, the method 600 includes the following steps.

S601: Obtain the $i^{th}$ load based on a CPU load state within the $i^{th}$ time period, where i=1, 2, 3, ..., and N, and both i and N are positive integers.

S602: Perform calculation based on N loads, to obtain a CPU frequency required by a current task.

Optionally, a larger value in the $N^{th}$ load and an average value of the N loads is used as the CPU frequency required by the current task.

S603: Perform CPU frequency scaling based on the CPU frequency required by the current task.

To understand step S601 more clearly, for example, FIG. 7 is a diagram of a method for obtaining the N loads according to an embodiment of this application.

As shown in FIG. 7, loads corresponding to a first scenario are 3, 3, 4, 7, and 5. When the first scenario ends and is switched to a second scenario, a newly generated load is 6. The N (N=5 in this example) loads that are obtained comply with a first-in first-out rule, the earliest load 3 is removed, and the newly generated load 6 is added. In this case, loads corresponding to the second scenario are 3, 4, 7, 5, and 6. In addition, a CPU frequency required by a current task (a task corresponding to the second scenario) is 6 (a larger value in an average value (5) of 3, 4, 7, 5, and 6 and the latest load (6)).

In the method, a value of the CPU frequency required for executing the current task is calculated by statistics collection based on loads in a past time period. A long prediction period and poor accuracy lead to a lag of frequency scaling. When a calculated value is used for predicting a CPU frequency required in the future, oversupply or undersupply is likely to occur. In addition, a load calculation period is 20 ms by default, resulting in poor real-time performance, and "undersupply" is likely to occur.

In view of this, embodiments of this application provide a frequency scaling method and apparatus. According to the method, a load statistics period can be dynamically adjusted based on an operation scenario of a user and a power consumption budget, to implement accurate frequency scaling, so that undersupply and oversupply can be avoided, that is, a power consumption waste can be avoided, while good performance of an electronic device is maintained.

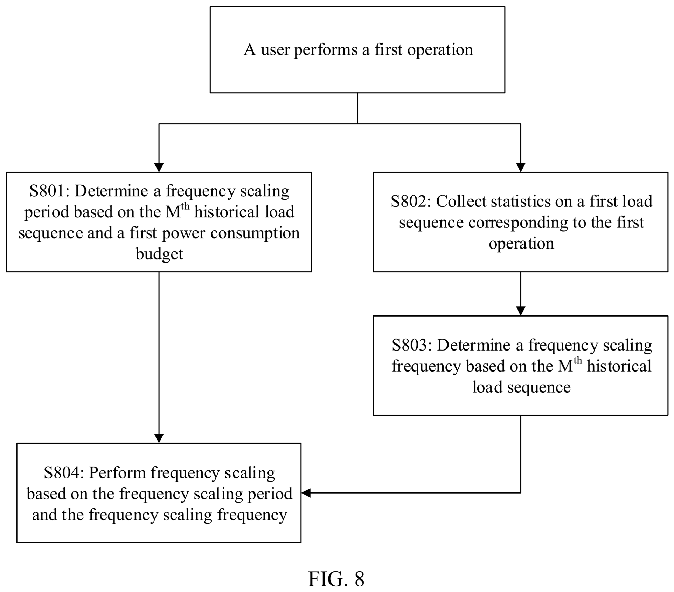

For example, FIG. 8 is a schematic flowchart of a frequency scaling method 800 according to an embodiment of this application. As shown in FIG. 8, the method 800 includes the following steps.

S801: In response to a first operation performed by a user, determine a frequency scaling period based on M historical load sequences and a first power consumption budget, where M is greater than or equal to 1.

The first power consumption budget is a power consumption budget that is of a current scenario and that is obtained based on a temperature rise prediction.

Specifically, the frequency scaling period is determined based on the $M^{th}$ historical load sequence in the M historical load sequences and the first power consumption budget. The $M^{th}$ historical load sequence in the M historical load sequences is a load sequence that last enters the historical load sequences, that is, a historical load sequence that is obtained by latest statistics collection.

Optionally, in this step, the frequency scaling period may be determined based on the M historical load sequences and the first power consumption budget before the user performs the first operation, for example, after the user completes a previous operation of the first operation and before the user performs the first operation.

Optionally, a value of M may be any integer ranging from 3 to 10, for example, may be 3, may be 4, or may be 5.

In an example, if the first operation is a fourth tap operation, the M historical load sequences correspond to a first tap operation, a second tap operation, and a third tap operation of the user. The first tap operation, the second tap operation, and the third tap operation occur before the fourth tap operation, and the third tap operation is a previous tap operation of the fourth tap operation.

Each of the M historical load sequences includes N load samples. In other words, a quantity of load samples included in the M historical load sequences is M×N.

Value of N=Duration of an operation corresponding to the historical load sequence/Statistics period of the historical load sequence. The statistics period of the historical load sequence may be, for example, any one of 4 ms, 8 ms, 12 ms, 16 ms, and 20 ms.

For example, an operation A corresponds to the first historical load sequence, and when a load statistics period corresponding to the first historical load sequence is 20 ms, Quantity N of load samples included in the first historical load sequence=Duration of the operation A/20 ms.

In an implementation, five power consumption budget values are first determined based on historical load sequences. The five power consumption budget values correspond to the statistics periods 4 ms, 8 ms, 12 ms, 16 ms, and 20 ms. Then, a power consumption budget (that is, the first power consumption budget) of a current scenario is determined based on a temperature rise prediction. Finally, the frequency scaling period is determined based on the five power consumption budget values and the power consumption budget of the current scenario. For a detailed manner of determining the frequency scaling period, refer to descriptions in subsequent embodiments.

S802: In response to the first operation performed by the user, collect statistics on a first load sequence corresponding to the first operation.

The first load sequence includes N load samples.

Value of N=Duration of the first operation/Statistics period of the first load sequence, where the statistics period of the first load sequence is 4 ms.

Optionally, before step S802, the method may further include the following step: Adjust the statistics period of the first load sequence to 4 ms, where the statistics period of the first load sequence may be adjusted by changing walt-related code of a Linux kernel.

S803: Determine a frequency scaling frequency (or referred to as a frequency channel number) based on the M$^{th}$ historical load sequence in the M historical load sequences.

Specifically, N frequencies corresponding to N load samples included in the M$^{th}$ historical load sequence in the M historical load sequences are determined based on the N load samples, and the N frequencies are used as frequency scaling frequencies.

S804: Perform frequency scaling based on the frequency scaling period and the frequency scaling frequency.

Optionally, step S802 is an optional step.

In this embodiment of this application, the frequency scaling period is determined based on a latest historical load sequence corresponding to a same scenario and a power consumption budget of the current scenario, so that the frequency scaling period can be dynamically adjusted, to avoid undersupply and oversupply, that is, avoid a power consumption waste. In addition, in the method, the frequency scaling frequency is determined based on a load sequence obtained by latest statistics collection in the current scenario, so that a frequency supply can respond to a load change in a timely manner, to achieve an effect of "rapid scaling up and down", and achieve a balance between performance and power consumption.

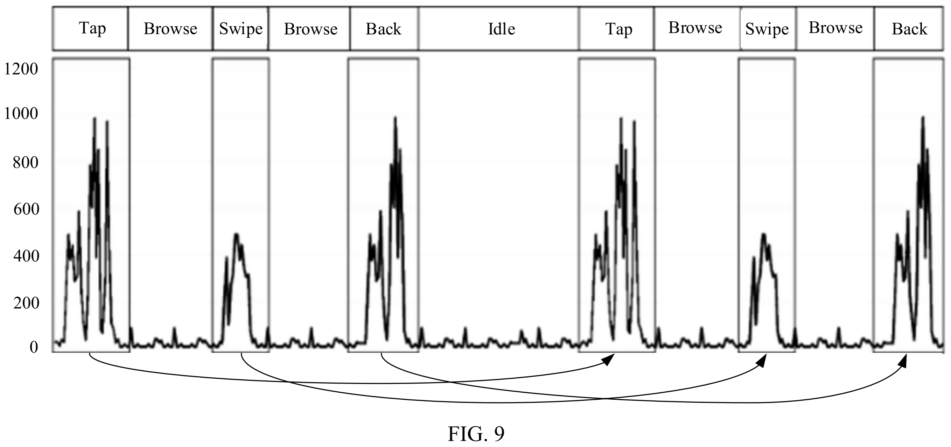

To understand the foregoing load sequences (for example, the historical load sequence or the first load sequence) more clearly, for example, FIG. 9 is a diagram of load sequences according to an embodiment of this application.

As shown in FIG. 9, the figure shows load sequences corresponding to two tap operations, load sequences corresponding to two swipe operations, load sequences corresponding to two back operations, load sequences corresponding to four browsing time periods, and a load sequence corresponding to one idle time period. Execution processes of the tap operation and the back operation correspond to largest loads, and a load corresponding to the swipe operation is the second. Loads corresponding to the idle time period and the browsing time period are almost 0. In other words, load states corresponding to different operations are generally different, and load states corresponding to some operations may vary greatly, for example, a tap operation and a swipe operation.

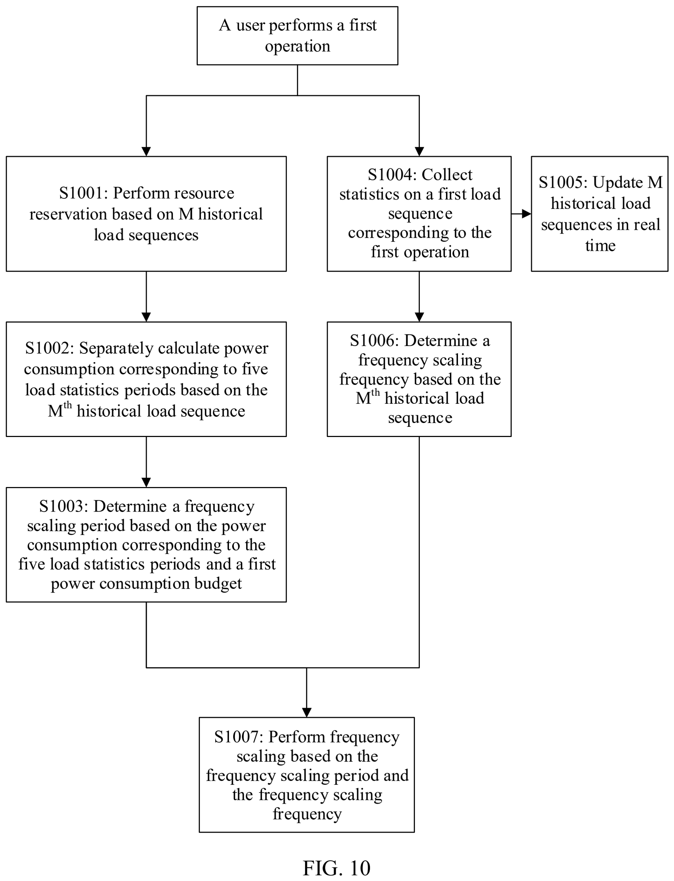

For example, FIG. 10 is a schematic flowchart of another frequency scaling method 1000 according to an embodiment of this application. As shown in FIG. 10, the method 1000 includes the following steps.

S1001: In response to a first operation performed by a user, perform resource reservation based on M historical load sequences.

Optionally, resource reservation may also be performed based on the M historical load sequences before the user performs the first operation.

Optionally, a value of M may be any integer ranging from 3 to 10, for example, may be 3, may be 4, or may be 5.

Each of the M historical load sequences includes N load samples. In other words, a quantity of load samples included in the M historical load sequences is M×N.

Value of N=Duration of an operation corresponding to the historical load sequence/Statistics period of the historical load sequence. The statistics period of the historical load sequence may be, for example, any one of 4 ms, 8 ms, 12 ms, 16 ms, and 20 ms.

For example, an operation A corresponds to the first historical load sequence, and when a load statistics period corresponding to the first historical load sequence is 20 ms, Quantity N of load samples included in the first historical load sequence=Duration of the operation A/20 ms.

Optionally, an average value or a largest value of the M×N load samples included in the M historical load sequences is first calculated based on the M historical load sequences, and then resource reservation is performed based on the average value or the largest value of the M×N load samples included in the M historical load sequences. For more detailed descriptions of resource reservation, refer to descriptions in subsequent embodiments.

S1002: Separately calculate power consumption corresponding to five load statistics periods (4 ms, 8 ms, 12 ms, 16 ms, and 20 ms) based on the M$^{th}$ historical load sequence in the M historical load sequences.

The M$^{th}$ historical load sequence in the M historical load sequences is a load sequence that last enters the historical load sequences, that is, a historical load sequence that is obtained by latest statistics collection.

Specifically, first, N frequencies corresponding to N load samples included in the M$^{th}$ historical load sequence are separately calculated, then N pieces of power consumption corresponding to the N frequencies are separately determined based on an energy efficiency lookup table, and finally, power consumption corresponding to a load statistics period is determined based on the N pieces of power consumption and the load statistics period. For more detailed descriptions of this step, refer to descriptions in subsequent embodiments.

The five load statistics periods are 4 ms, 8 ms, 12 ms, 16 ms, and 20 ms. Calculation is separately performed in the five load statistics periods based on the $M^{th}$ historical load sequence in the M historical load sequences, and five power consumption values that are in one-to-one correspondence with the five load statistics periods are obtained.

S1003: Determine a frequency scaling period based on the power consumption corresponding to the five load statistics periods (4 ms, 8 ms, 12 ms, 16 ms, and 20 ms) and a first power consumption budget.

The first power consumption budget is a power consumption budget that is of a current scenario and that is obtained based on a temperature rise prediction.

For more detailed descriptions of this step, refer to descriptions in subsequent embodiments.

It may be understood that steps S1001 to S1003 may be performed before the first operation.

It may be understood that an execution sequence of step S1001 and step S1002 is not limited, and an execution sequence of step S1002 and step S1103 is not limited.

S1004: In response to the first operation performed by the user, collect statistics on a first load sequence corresponding to the first operation.

The first load sequence includes N load samples.

Value of N=Duration of the first operation/Statistics period of the first load sequence, where the statistics period of the first load sequence is 4 ms.

Optionally, before step S1004, the method may further include the following step: Adjust the statistics period of the first load sequence to 4 ms, where the statistics period of the first load sequence may be adjusted by changing walt-related code of a Linux kernel.

The load statistics period may alternatively be referred to as a walt period.

S1005: Update the M historical load sequences in real time.

Optionally, the M historical load sequences are updated in a first-in first-out manner.

For explanations of the method for updating the M historical load sequences, refer to the descriptions in the embodiment in FIG. 7.

S1006: Determine a frequency scaling frequency (or referred to as a frequency channel number) based on the $M^{th}$ historical load sequence.

Specifically, N frequencies corresponding to N load samples included in the $M^{th}$ historical load sequence are determined based on the N load samples, and the N frequencies are used as frequency scaling frequencies.

It may be understood that an execution sequence of step S1006 and steps S1004 and S1005 is not limited.

It may be understood that an execution sequence of step S1006 and steps S1001 to S1003 is not limited.

S1007: Perform frequency scaling based on the frequency scaling period and the frequency scaling frequency.

In this embodiment of this application, a risk of a total high load can be identified in advance based on a historical load sequence, and resource reservation can be performed, so that undersupply of resources caused by the total high load can be reduced. In addition, in the method, the frequency scaling period is determined based on a latest historical load sequence corresponding to a same scenario and a power consumption budget of the current scenario, so that the frequency scaling period can be dynamically adjusted, to avoid undersupply and oversupply, that is, avoid a power consumption waste. In addition, in the method, the frequency scaling frequency is determined based on the load sequence obtained by latest statistics collection in the same scenario, so that a frequency supply can respond to a load change in a timely manner, to achieve an effect of "rapid scaling up and down", and achieve a balance between performance and power consumption.

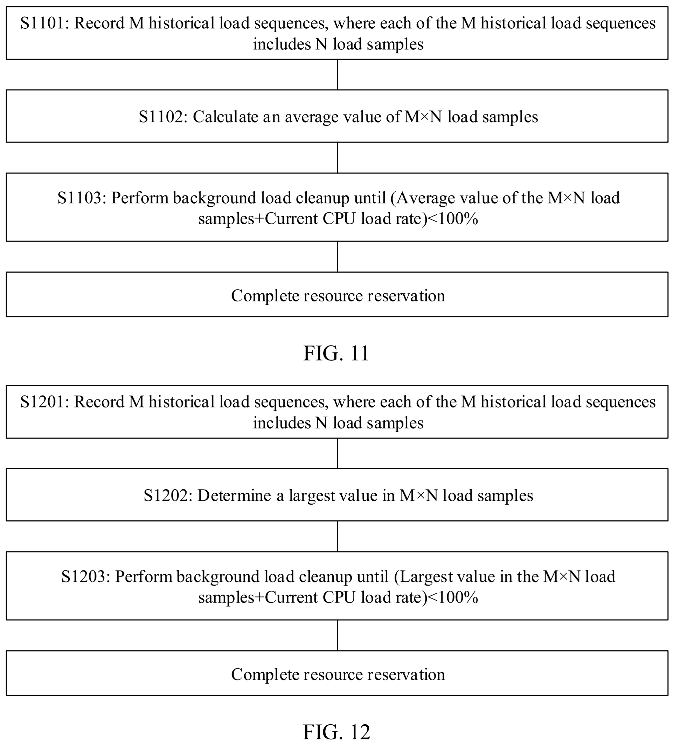

To understand step S1001 (perform resource reservation based on M historical load sequences) more clearly, for example, FIG. 11 is a schematic flowchart of a resource reservation method 1100 according to an embodiment of this application. As shown in FIG. 11, the method 1100 includes the following steps.

S1101: Record M historical load sequences, where each of the M historical load sequences includes N load samples.

Optionally, a load statistics value may be denoted as predict_load[i][j], where i represents the $i^{th}$ load sequence, and j represents the $j^{th}$ load sample in the load sequence. In other words, predict_load[i][j] represents a load statistics value corresponding to the $j^{th}$ load sample in the $i^{th}$ load sequence, where i= 1, 2, ..., and M, and j=0, 1, 2, ..., and N-1.

Similarly, the $i^{th}$ load sequence may be denoted as predict_load[i].

Optionally, a value of M may be any integer ranging from 3 to 10, for example, may be 3, may be 4, or may be 5.

Each of the M historical load sequences includes N load samples. In other words, a quantity of load samples included in the M historical load sequences is M×N.

Value of N=Duration of an operation corresponding to the historical load sequence/Statistics period of the historical load sequence. The statistics period of the historical load sequence may be, for example, any one of 4 ms, 8 ms, 12 ms, 16 ms, and 20 ms.

For example, an operation A corresponds to the first historical load sequence, and when a load statistics period corresponding to the first historical load sequence is 20 ms, Quantity N of load samples included in the first historical load sequence=Duration of the operation A/20 ms.

S1102: Calculate an average value of M×N load samples.

Average value of the M×N load samples=Sum of M×N load samples/(M×N).

S1103: Perform background load cleanup until a condition is met: (Average value of the M×N load samples+Current CPU load rate (proc/stat))<100%. That is, resource reservation is completed.

Optionally, performing background load cleanup may be preferentially performing short-time freezing (for example, freezing by using a native mechanism of an operating system) on a process that is irrelevant to the foreground based on an association between a current process and the foreground.

After resource reservation is completed, a normal free frequency scaling process is restored. In addition, after the first operation ends, the M historical load sequences are updated (refer to step S1005).

Optionally, step S1103 is performed in response to the first operation performed by the user.

In this embodiment of this application, a risk of a total high load can be identified in advance based on a historical load sequence, and resource reservation can be performed, so that undersupply of resources caused by the total high load can be reduced.

In parallel with the embodiment in FIG. 11, for example, FIG. 12 is a schematic flowchart of another resource reservation method 1200 according to an embodiment of this application. As shown in FIG. 12, the method 1100 includes the following steps.

S1201: Record M historical load sequences, where each of the M historical load sequences includes N load samples.

Explanations of this step are the same as the explanations of step S1101 in the embodiment in FIG. 11. For brevity, details are not described herein again.

S1202: Determine a largest value in M×N load samples.

The largest value in the M×N load samples is a largest value in predict load[1][0], predict_load[1][1], predict load[1][2], predict_load[1] [3], ..., predict_load[1][N-1], ..., predict_load[M][0], predict_load[M][1], predict_load[M][2], predict_load[M][3], ..., and predict _load[M] [N-1].

S1203: Perform background load cleanup until a condition is met: (Largest value in the M×N load samples+Current CPU load rate)<100%. That is, resource reservation is completed.

Optionally, performing background load cleanup may be preferentially performing short-time freezing (for example, freezing by using a native mechanism of an operating system) on a process that is irrelevant to the foreground based on an association between a current process and the foreground.

After resource reservation is completed, a normal free frequency scaling process is restored. In addition, after the first operation ends, the M historical load sequences are updated (refer to step S1005).

Optionally, step S1203 is performed in response to the first operation performed by the user.

In this embodiment of this application, a risk of a total high load can be identified in advance based on a historical load sequence, and resource reservation can be performed, so that undersupply of resources caused by the total high load can be reduced. In addition, compared with the method in the embodiment in FIG. 11, in the method in this embodiment, resource reservation is performed based on the largest value in the plurality of historical load samples, so that more sufficient resources can be reserved, and undersupply of resources caused by the total high load can be avoided to a greater extent.

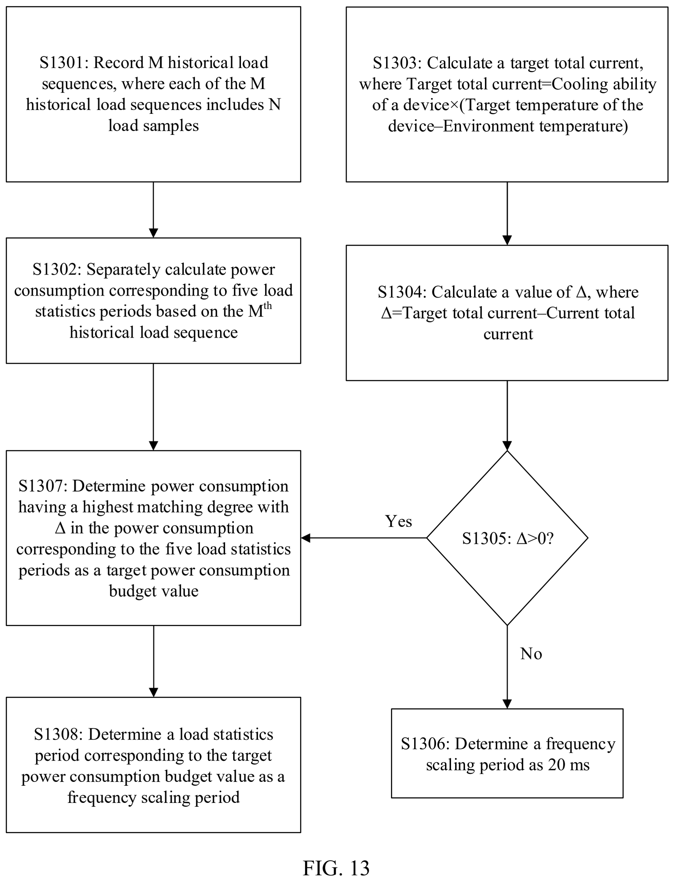

To understand steps S801, S1002, and S1003 (determine a frequency scaling period based on the M historical load sequences and the first power consumption budget) more clearly, for example, FIG. 13 is a schematic flowchart of a method 1300 for determining a frequency scaling period according to an embodiment of this application. As shown in FIG. 13, the method 1300 includes the following steps.

S1301: Record M historical load sequences, where each of the M historical load sequences includes N load samples.

Explanations of this step are the same as the explanations of step S1101 in the embodiment in FIG. 11. For brevity, details are not described herein again.

S1302: Separately calculate power consumption corresponding to five load statistics periods based on the $M^{th}$ historical load sequence in the M historical load sequences.

Explanations of this step are the same as the explanations of step S1002 in the embodiment in FIG. 10. For brevity, details are not described herein again.

S1303: Calculate a target total current corresponding to a device.

Target total current (Target_current)=Cooling ability of the device (cool_ability)×(Target temperature of the device (target_thermal)-Environment temperature (env_thermal)).

The cooling ability of the device is a fixed value, is determined by a hardware configuration of a product and can be obtained by actual tests, and is in a unit of mA/°C. The target temperature of the device is defined by a terminal manufacturer and is in a unit of °C. The environment temperature can be obtained by fitting based on a terminal sensor and is in a unit of °C. A unit of the target total current is mA.

S1304: Calculate a value of Δ.

$$\Delta = \text{Target total current} - \text{Current total current (total\_current)}.$$

The current total current may be directly read by running a command, and is in a unit of mA.

It may be understood that Target total current $\times$ 3.8 V is the first power consumption budget in the embodiment in FIG. 8 and the embodiment in FIG. 10.

Optionally, $\Delta$=Target total power consumption-Current total power consumption, where Target total power consumption=Target total current$\times$3.8 V, and Current total power consumption=Current total current$\times$3.8 V.

S1305: Determine whether the value of Δ is greater than 0, and if the value of Δ is less than or equal to 0, perform step S1306, or if the value of Δ is greater than 0, perform step S1307.

S1306: Determine a frequency scaling period as 20 ms.

It may be understood that when the value of Δ is less than or equal to 0, it indicates that the target total current is less than or equal to the current total current. In other words, the target total power consumption is less than the current total power consumption, and a power consumption increment generated by a current aggressive frequency scaling policy causes deterioration of temperature rise, and therefore performance cannot be improved. Correspondingly, the frequency scaling period is determined as a largest value 20 ms in five periods.

S1307: Determine a power consumption value having a highest matching degree with Δ in five power consumption values that are in one-to-one correspondence with five load statistics periods as a target power consumption budget value.

Optionally, the power consumption value having the highest matching degree with Δ may be a power consumption value closest to the value of Δ.

Optionally, when Δ=Target total current-Current total current, the value of Δ may be directly compared with the five power consumption values that are in one-to-one correspondence with the five load statistics periods, and a power consumption value closest to the value of Δ in the five power consumption values is determined as the power consumption value having the highest matching degree with Δ. Alternatively, a value obtained by $\Delta\times$3.8 V may be directly compared with the five power consumption values that are in one-to-one correspondence with the five load statistics periods, and a power consumption value closest to the value of Δ in the five power consumption values is determined as the power consumption value having the highest matching degree with Δ.

Optionally, when Δ=Target total power consumption-Current total power consumption, the value of Δ may be directly compared with the five power consumption values that are in one-to-one correspondence with five load statistics periods, and a power consumption value closest to the value of Δ in the five power consumption values is determined as the power consumption value having the highest matching degree with Δ.

S1308: Determine a load statistics period corresponding to the target power consumption budget value as a frequency scaling period corresponding to a first operation.

It may be understood that when the value of Δ is greater than 0, it indicates that the target total current is greater than the current total current. In other words, a current load cannot meet the first power consumption budget, and performance needs to be improved to meet the requirement. Correspondingly, in this case, a load statistics period corresponding to power consumption that best matches (having a highest matching degree with) the value of Δ may be determined as the frequency scaling period corresponding to the first operation. For example, if the load statistics period corresponding to the power consumption that best matches the value of Δ is 12 ms, the frequency scaling period is determined as 12 ms.

In this embodiment of this application, the frequency scaling period is determined based on a latest historical load sequence corresponding to a same scenario and a power consumption budget (obtained based on the temperature rise prediction) of the current scenario, and the temperature rise prediction is included in a frequency scaling basis, so that the frequency scaling period can be dynamically and accurately adjusted, to avoid undersupply and oversupply, that is, avoid a power consumption waste.

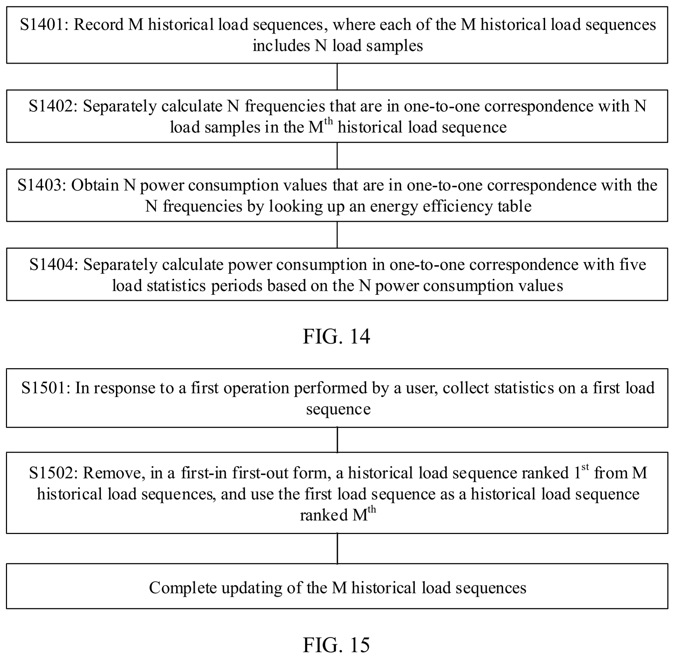

To understand step S1002 in the embodiment in FIG. 10 and step S1302 (separately calculate the power consumption corresponding to the five load statistics periods) in the embodiment in FIG. 13 more clearly, for example, FIG. 14 is a schematic flowchart of a method 1400 for calculating power consumption corresponding to a load statistics period according to an embodiment of this application. As shown in FIG. 14, the method 1400 includes the following steps.

S1401: Record M historical load sequences, where each of the M historical load sequences includes N load samples.

Explanations of this step are the same as the explanations of step S1101 in the embodiment in FIG. 11. For brevity, details are not described herein again.

Optionally, the M$\times$N load samples included in the M historical load sequences may be represented as:

predict_load[1][0], predict_load[1] [1], predict_load[1][2], ..., and predict_load[1][N-1]; ...; and predict_load[M][0], predict_load[M][1], predict_load[M][2], ..., and predict_load[M][N-1].

S1402: Separately calculate N frequency channel numbers (or referred to as frequencies) that are in one-to-one correspondence with N load samples in the M$^{th}$ load sequence.

Optionally, a formula for calculating frequencies corresponding to the N load samples in the M$^{th}$ load sequence may be:

$$\text{predict\_freq}[M][j] = \text{curFreq} \times \text{predict\_load}[M][j]/\text{targetload},$$

where j=0, 1, 2, ..., and N-1.

curFreq indicates a current frequency, and may be directly read by a device.
predict_load[M][j] is a load statistics value corresponding to the j$^{th}$ load sample in the M$^{th}$ load sequence.
targetload indicates a target load. A maximum value is 100 and a minimum value is 1. The value varies in different operation scenarios, and may follow a native configuration of each terminal manufacturer.

Specifically, the N frequencies corresponding to the M$^{th}$ historical load sequence are:

$$\text{predict\_freq}[M][0] = \text{curFreq} \times \text{predict\_load}[M][0]/\text{targetload};$$

$$\text{predict\_freq}[M][1] = \text{curFreq} \times \text{predict\_load}[M][1]/\text{targetload};$$

...; and

$$\text{predict\_freq}[M][N-1] = \text{curFreq} \times \text{predict\_load}[M][N-1]/\text{targetload}.$$

S1403: Obtain N power consumption values that are in one-to-one correspondence with the N frequencies by looking up an energy efficiency table.

In an example, Qualcomm Snapdragon 8gen-1 is used as an example, and an energy efficiency table of a little core may be shown in Table 1.

Table 1

| Frequency | Power consumption | Frequency | Power consumption | Frequency | Power consumption |
|---|---|---|---|---|---|
| 556800 | 51.19 | 1132800 | 104.14 | 1670400 | 222.24 |
| 691200 | 62.32 | 1228800 | 120.54 | 1804800 | 253.16 |
| 806400 | 71.95 | 1324800 | 129.36 | 1920000 | 320.38 |
| 940800 | 82.65 | 1440000 | 166.96 | 2016000 | 337.71 |
| 1056000 | 93.31 | 1555200 | 195.40 | | |

It can be learned from Table 1 that, in the energy efficiency table, each frequency corresponds to a power consumption value, and the power consumption value corresponding to the frequency may be found based on the frequency in the energy efficiency table.

Optionally, the N power consumption values that are in one-to-one correspondence with the N frequencies may be represented as:
predict_freq_power[M][0], predict_freq_power[M][1], predict_freq_power[M][2], ..., and predict_freq_power[M][N-1].

S1404: Separately calculate power consumption (predict_power) that are in one-to-one correspondence with five load statistics periods (4 ms, 8 ms, 12 ms, 16 ms, and 20 ms) based on the N power consumption values.

When a load statistics period is 4 ms, a formula for calculating power consumption corresponding to the load statistics period (4 ms) is:

$$\text{predict\_power} = \sum(\text{predict\_freq\_power}[M][j] \times \text{cpuUtil}[M][j]) \times \text{load statistics period},$$

where j = 0, 1, 2, ..., and N-1, and
cpuUtil is a CPU duty cycle/usage, and may be obtained by running a top command in CMD or proc/stat.

When a load statistics period is 8 ms, a formula for calculating power consumption corresponding to the load statistics period (8 ms) is:

$$predict\_power=\sum(predict\_freq\_power[M][j]\times cpuUtil[M][j])\times load\ statistics\ period/2,$$

where j=0, 1, 2, ..., and N-1 (N is an even number); or

$$predict\_power=\sum(predict\_freq\_power[M][j]\times cpuUtil[M][j])\times load\ statistics\ period/2,$$

where j=0, 1, 2, ..., and N-2 (N is an odd number). When a load statistics period is 12 ms, a formula for calculating power consumption corresponding to the load statistics period (12 ms) is:

$$predict\_power=\sum(predict\_freq\_power[M][j]\times cpuUtil[M][j])\times load\ statistics\ period/3,$$

where j=0, 1, 2, ..., and N-1 (N is a multiple of 3);

$$predict\_power=\sum(predict\_freq\_power[M][j]\times cpuUtil[M][j])\times load\ statistics\ period/3,$$

where j=0, 1, 2, ..., and N-2 (N-1 is a multiple of 3); or

$$predict\_power=\sum(predict\_freq\_power[M][j]\times cpuUtil[M][j])\times load\ statistics\ period/3,$$

where j=0, 1, 2, ..., and N-3 (N-2 is a multiple of 3).

When a load statistics period is 16 ms, a formula for calculating power consumption corresponding to the load statistics period (16 ms) is:

$$predict\_power=\sum(predict\_freq\_power[M][j]\times cpuUtil[M][j])\times load\ statistics\ period/4,$$

where j=0, 1, 2, ..., and N-1 (N is a multiple of 4);

$$predict\_power=\sum(predict\_freq\_power[M][j]\times cpuUtil[M][j])\times load\ statistics\ period/4,$$

where j=0, 1, 2, ..., and N-2 (N-1 is a multiple of 4);

$$predict\_power=\sum(predict\_freq\_power[M][j]\times cpuUtil[M][j])\times load\ statistics\ period/4,$$

where j=0, 1, 2, ..., and N-3 (N-2 is a multiple of 4); or

$$predict\_power=\sum(predict\_freq\_power[M][j]\times cpuUtil[M][j])\times load\ statistics\ period/4,$$

where j = 0, 1, 2, ..., and N-4 (N-3 is a multiple of 4).

When a load statistics period is 20 ms, a formula for calculating power consumption corresponding to the load statistics period (20 ms) is:

$$predict\_power=\sum(predict\_freq\_power[M][j]\times cpuUtil[M][j])\times load\ statistics\ period/5,$$

where j=0, 1, 2, ..., and N-1 (N is a multiple of 5);

$$predict\_power=\sum(predict\_freq\_power[M][j]\times cpuUtil[M][j])\times load\ statistics\ period/5,$$

where j=0, 1, 2, ..., and N-2 (N-1 is a multiple of 5);

$$predict\_power=\sum(predict\_freq\_power[M][j]\times cpuUtil[M][j])\times load\ statistics\ period/5,$$

where j=0, 1, 2, ..., and N-3 (N-2 is a multiple of 5);

$$predict\_power=\sum(predict\_freq\_power[M][j]\times cpuUtil[M][j])\times load\ statistics\ period/5,$$

where j=0, 1, 2, ..., and N-4 (N-3 is a multiple of 5); or

$$predict\_power=\sum(predict\_freq\_power[M][j]\times cpuUtil[M][j])\times load\ statistics\ period/5,$$

where j = 0, 1, 2, ..., and N-5 (N-4 is a multiple of 5).

The following may be understood.

A load calculation method in walt is as follows:

$$cpuLoad=cpuUtil*100/CPU\_capacity,$$

where

cpuUtil is a cpu duty cycle/usage, and may be obtained by running a top command in cmd or proc/stat.

A value of the CPU capacity is a normalized value ranging from 0 to 1024, and is usually a fixed value (different values may be configured by terminal manufacturers in different scenarios).

The load-based native frequency scaling method is as follows:

NextFreq=curFreq*cpuLoad/targetload, where a maximum value of targetload is 100 and a minimum value is 1. The configuration varies in different scenarios, and may follow a native configuration of each terminal manufacturer.

A value in predict_load[i][j] is cpuLoad. Therefore, the current CPU power consumption may be calculated according to the foregoing formula: predict_power=$\sum$(predict _freq_power[M] [j]$\times$cpuUtil[M][j])$\times$load statistics period.

To understand step S1005 (update the M historical load sequences in real time) in the embodiment in FIG. 10 more clearly, for example, FIG. 15 is a schematic flowchart of a method 1500 for updating M historical load sequences according to an embodiment of this application. As shown in FIG. 15, the method 1500 includes the following steps.

S1501: In response to a first operation performed by a user, collect statistics on a first load sequence.

Explanations of this step are the same as the explanations of step S802 in the embodiment in FIG. 8 and explanations of step S1004 in the embodiment in FIG. 10. For brevity, details are not described herein again.

S1502: Remove, in a first-in first-out form, a historical load sequence ranked 1st from the M historical load sequences, and use the first load sequence as a historical load sequence ranked Mth, to complete updating of the M historical load sequences.

For a specific process of updating the M historical load sequences, refer to the descriptions in the embodiment in FIG. 7.

In this embodiment of this application, when the user performs a new scenario operation, a load sequence corresponding to the operation is recorded in a timely manner, the recorded load sequence is updated to the M historical load sequences in a timely manner after the operation ends, and a first-in first-out form is used in an update process, to ensure that the M historical load sequences are maintained as load sequences obtained by latest M times of statistics collection. In this way, resources reserved based on the M historical load sequences are more appropriate, and a dynamic power consumption value obtained based on the M historical load sequences is more referential, so that the determined frequency scaling period can be more accurate, and power consumption overheads are further reduced while accurate frequency scaling is implemented.

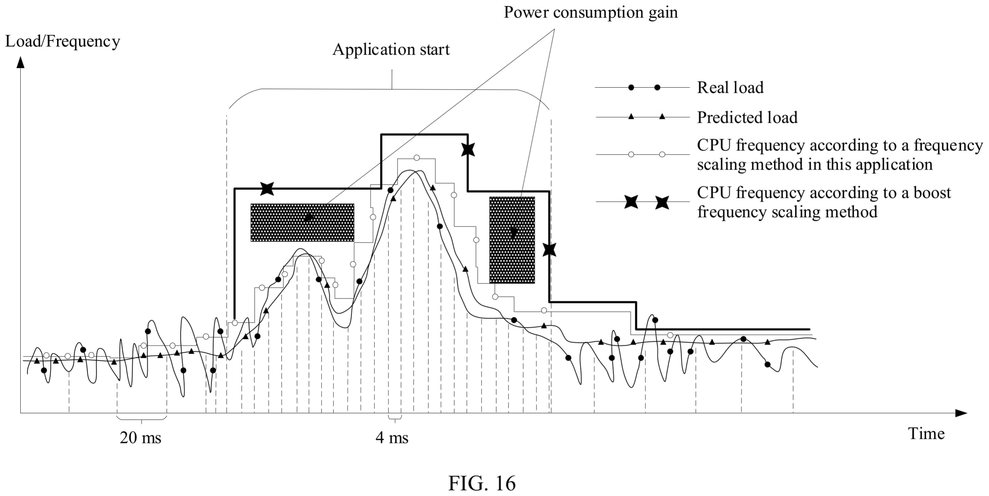

For example, FIG. 16 is a diagram of effect comparison between a frequency scaling method provided in this application and an existing boost frequency scaling method (the method in the embodiment in FIG. 3).

As shown in FIG. 16, a curve marked with a black solid circle represents a change state of a real load over time, a curve marked with a black solid triangle represents a change state of a predicted load over time, a curve marked with a hollow circle represents a change state of a load corresponding to the frequency scaling method in this application over time, and a curve marked with a solid four-angle star represents a change state of a load corresponding to the boost frequency scaling method over time.

It can be learned from FIG. 16 that, a fitting degree between the curve (the curve marked with the hollow circle) corresponding to a CPU frequency in the frequency scaling method of this application and the curve (the curve marked with the black solid circle) corresponding to the real load is significantly higher than a fitting degree between the curve (the curve marked with the solid four-angle star) corresponding to a CPU frequency in the boost frequency scaling method and the curve (the curve marked with the black solid circle) corresponding to the real load. Compared with the boost frequency scaling method, the frequency scaling method in this application has a larger power consumption gain (a rectangular area filled with shadows in FIG. 16) when a performance requirement is met.

It can be further learned from FIG. 16 that a shorter load period (FIG. 16 shows a corresponding load state when the load period is switched between 20 ms and 4 ms) indicates higher performance, and a longer load period indicates lower power consumption. In other words, a load change curve (for example, the curve marked with the hollow circle) provided in a frequency scaling method process has a higher fitting degree with the real load (for example, the curve marked with the black solid circle), and indicates better performance and lower power consumption. The fitting degree reaches a required value, a computing power (frequency) supply can respond to the load change in a timely manner, to achieve an effect of "rapid scaling up and down", and avoid oversupply and undersupply problems.

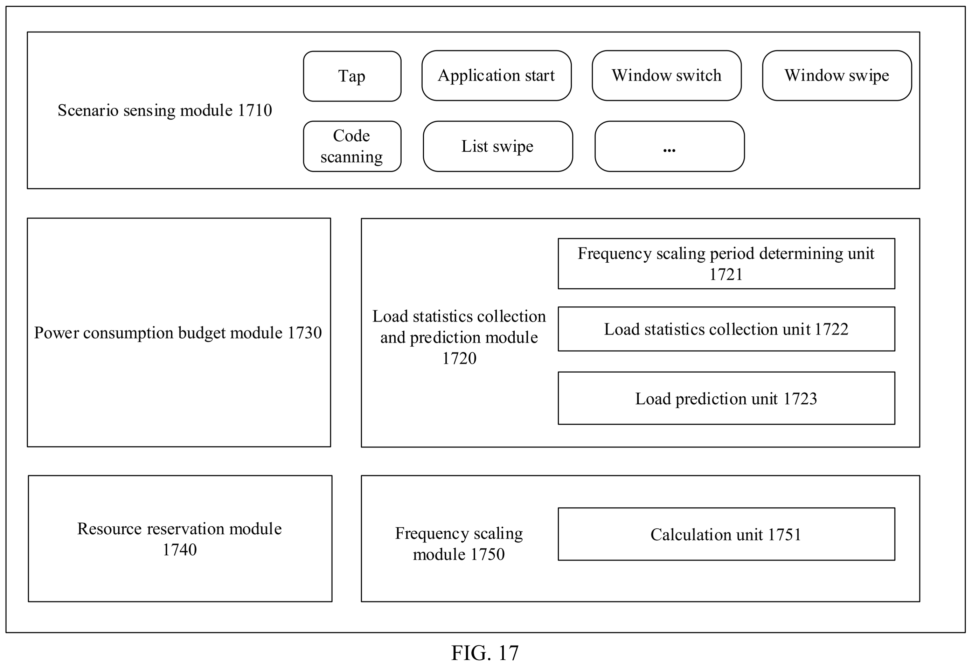

For example, FIG. 17 is a diagram of a system architecture corresponding to a frequency scaling method according to an embodiment of this application. As shown in FIG. 17, the system architecture includes a scenario sensing module 1710, a load statistics collection and prediction module 1720, a power consumption budget module 1730, a resource reservation module 1740, and a frequency scaling module 1750. The load statistics collection and prediction module 1720 includes a frequency scaling period determining unit 1721, a load statistics collection unit 1722, and a load prediction unit 1723. The frequency scaling module 1750 includes a calculation unit 1751. Details are as follows:

The scenario sensing module 1710 is configured to identify a first operation of a user.

Optionally, the first operation may be any one of an application start operation, a tap operation, a swipe operation, and a window switching operation. In addition, the first operation may be another operation that triggers execution of a task, for example, an unlock operation, an edit operation, or a back operation, or a code scanning operation. This is not limited in this application.

Optionally, the scenario sensing module 1710 may be an application manager service (application manager service, AMS) or a window manager service (windows manager service, WMS) module at a framework layer of an Android system.

The scenario sensing module 1710 is further configured to notify the load statistics collection and prediction module 1720 when identifying the first operation of the user.

The frequency scaling period determining unit 1721 included in the load statistics collection and prediction module 1720 is configured to: in response to the first operation performed by the user, determine a frequency scaling period based on the $M^{th}$ historical load sequence in M historical load sequences and a first power consumption budget, where M is greater than or equal to 1.

The $M^{th}$ historical load sequence in the M historical load sequences is a load sequence that last enters the historical load sequences, that is, a historical load sequence that is obtained by latest statistics collection.

The first power consumption budget is a power consumption budget that is of a current scenario and that is obtained based on a temperature rise prediction.

Optionally, a value of M may be any integer ranging from 3 to 10, for example, may be 3, may be 4, or may be 5.

In an example, if the first operation is a fourth tap operation, the M historical load sequences correspond to a first tap operation, a second tap operation, and a third tap operation of the user. The first tap operation, the second tap operation, and the third tap operation occur before the fourth tap operation, and the third tap operation is a previous tap operation of the fourth tap operation.

Each of the M historical load sequences includes N load samples. In other words, a quantity of load samples included in the M historical load sequences is M×N.

Value of N=Duration of an operation corresponding to the historical load sequence/Statistics period of the historical load sequence. The statistics period of the historical load sequence may be, for example, any one of 4 ms, 8 ms, 12 ms, 16 ms, and 20 ms.

For example, an operation A corresponds to the first historical load sequence, and when a load statistics period corresponding to the first historical load sequence is 20 ms, Quantity N of load samples included in the first historical load sequence=Duration of the operation A/20 ms.

The power consumption budget module 1730 is configured to determine five power consumption budget values based on the $M^{th}$ historical load sequence, where the five power consumption budget values correspond to the statistics periods 4 ms, 8 ms, 12 ms, 16 ms, and 20 ms. The power consumption budget module 1730 is further configured to determine the power consumption budget (that is, the first power consumption budget) of the current scenario based on the temperature rise prediction.

The frequency scaling period determining unit 1721 is specifically configured to determine the frequency scaling period based on the five power consumption budget values and the power consumption budget of the current scenario.

The load statistics collection unit 1722 included in the load statistics collection and prediction module 1720 is configured to: in response to the first operation performed by the user, collect statistics on a first load sequence corresponding to the first operation.

The first load sequence includes N load samples.

Value of N=Duration of the first operation/Statistics period of the first load sequence, where the statistics period of the first load sequence is 4 ms.

The load prediction unit 1723 included in the load statistics collection and prediction module 1720 is configured to determine a frequency scaling frequency (or referred to as a frequency channel number) based on the $M^{th}$ historical load sequence.

Specifically, N frequencies corresponding to N load samples included in the $M^{th}$ historical load sequence are determined based on the N load samples, and the N frequencies are used as frequency scaling frequencies.

The resource reservation module 1740 is configured to: in response to the first operation performed by the user, perform resource reservation based on the M historical load sequences.

Optionally, a value of M may be any integer ranging from 3 to 10, for example, may be 3, may be 4, or may be 5.

Each of the M historical load sequences includes N load samples. In other words, a quantity of load samples included in the M historical load sequences is $M \times N$.

Value of N=Duration of an operation corresponding to the historical load sequence/Statistics period of the historical load sequence. The statistics period of the historical load sequence may be, for example, any one of 4 ms, 8 ms, 12 ms, 16 ms, and 20 ms.

For example, an operation A corresponds to the first historical load sequence, and when a load statistics period corresponding to the first historical load sequence is 20 ms, Quantity N of load samples included in the first historical load sequence=Duration of the operation A/20 ms.

Optionally, the resource reservation module 1740 is specifically configured to: first calculate an average value or a largest value of the $M \times N$ load samples included in the M historical load sequences based on the M historical load sequences, and then perform resource reservation based on the average value or the largest value of the $M \times N$ load samples included in the M historical load sequences.

The frequency scaling module 1750 is configured to perform frequency scaling based on the frequency scaling period and the frequency scaling frequency.

Optionally, the frequency scaling module 1750 includes the calculation unit 1751, and the calculation unit 1751 is configured to perform frequency scaling based on the frequency scaling period and the frequency scaling frequency.

In this embodiment of this application, the frequency scaling period is determined based on a latest historical load sequence corresponding to a same scenario and a power consumption budget of the current scenario, so that the frequency scaling period can be dynamically adjusted, to avoid undersupply and oversupply, that is, avoid a power consumption waste. In addition, the apparatus determines the frequency scaling frequency based on a load sequence obtained by latest statistics collection in the same scenario, so that a frequency supply can respond to a load change in a timely manner, to achieve an effect of "rapid scaling up and down", and achieve a balance between performance and power consumption.

An embodiment of this application provides an electronic device. The electronic device includes a scenario sensing module 1710, a load statistics collection and prediction module 1720, a power consumption budget module 1730, a resource reservation module 1740, and a frequency scaling module 1750 in the embodiment in FIG. 17.

The electronic device in this embodiment of this application may be a portable electronic device, such as a mobile phone, a tablet computer, a camera, a video camera, a video recorder, or a wearable electronic device (such as a smartwatch) with a camera function, or may be a computer (such as a Windows PC) and a terminal device in a 5G network, or a terminal device in a future evolved public land mobile network (public land mobile network, PLMN). This is not limited in this application.

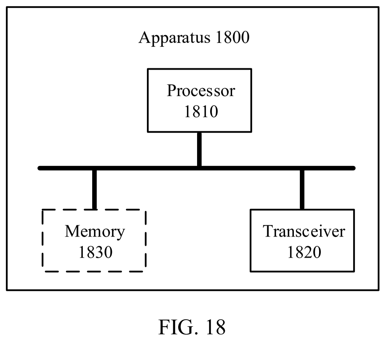

As shown in FIG. 18, for example, an embodiment of this application further provides a diagram of functional modules of a frequency scaling apparatus 1800. The frequency scaling apparatus 1800 includes a processor 1810. The processor 1810 is coupled to a memory 1820. The memory 1820 is configured to store a computer program or instructions and/or data. The processor 1810 is configured to execute the computer program or instructions and/or data stored in the memory 1820, so that the methods in the foregoing method embodiments are executed.

Optionally, the frequency scaling apparatus 1800 includes one or more processors 1810.

Optionally, as shown in FIG. 18, the frequency scaling apparatus 1800 may further include a memory 1820.

Optionally, the frequency scaling apparatus 1800 may include one or more memories 1820.

Optionally, the memory 1820 and the processor 1810 may be integrated together or separately disposed.

Optionally, as shown in FIG. 18, the frequency scaling apparatus 1800 may further include a transceiver 1830, and the transceiver 1830 is configured to receive and/or send a signal. For example, the processor 1810 is configured to control the transceiver 1830 to receive and/or send a signal. One or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may include but is not limited to, at least one of the following types: a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in a SoC (system on chip) or an application-specific integrated circuit (application-specific integrated circuit, ASIC), or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or without software to execute the foregoing method procedure.

When the foregoing modules or units are implemented by using software, all or some of the foregoing modules or units may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that the units and method steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A frequency scaling method, wherein the method comprises:

   in response to a first operation of a user, determining a frequency scaling frequency based on a first historical load sequence, wherein the first historical load sequence is a historical load sequence obtained by latest statistics collection in M historical load sequences, and M is a positive integer greater than or equal to 1;
   determining a frequency scaling period based on a first power consumption budget and the frequency scaling frequency, wherein the first power consumption budget is a power consumption budget that is obtained based on a temperature rise prediction and that corresponds to the first operation; and
   performing frequency scaling based on the frequency scaling period and the frequency scaling frequency.

2. The method according to claim 1, wherein the method further comprises:
   in response to the first operation of the user, performing resource reservation based on the M historical load sequences.

3. The method according to claim 2, wherein the performing resource reservation based on the M historical load sequences comprises:

   determining a first average value based on the M historical load sequences, wherein the first average value is an average value of M×N load samples comprised in the M historical load sequences; and
   performing background cleanup until a sum of the first average value and a current CPU load is less than 100%, that is, completing resource reservation.

4. The method according to claim 2, wherein the performing resource reservation based on the M historical load sequences comprises:

   determining a largest value in M×N load samples comprised in the M historical load sequences; and
   performing background cleanup until a sum of the largest value and a current CPU load is less than 100%, that is, completing resource reservation.

5. The method according to any one of claims 1 to 4, wherein the method further comprises:
   collecting statistics on a first load sequence corresponding to the first operation, wherein a load statistics period of the first load sequence is 4 milliseconds.

6. The method according to claim 5, wherein the method further comprises:
   updating the M historical load sequences based on the first load sequence.

7. The method according to claim 6, wherein the updating the M historical load sequences based on the first load sequence comprises:
   removing, in a first-in first-out manner, a historical load sequence ranked 1st from the M historical load sequences, and using the first load sequence as a historical load sequence ranked Mth.

8. The method according to any one of claims 1 to 7, wherein the determining a frequency scaling period based on a first power consumption budget and the frequency scaling frequency comprises:

   determining the first power consumption budget;
   determining a first difference by subtracting current total power consumption from the first power consumption budget; and
   when the first difference is less than or equal to 0, determining the frequency scaling period as 20 milliseconds; or
   when the first difference is greater than 0, determining, based on the frequency scaling frequency, a plurality of power consumption values that are in one-to-one correspondence with a plurality of load statistics periods, wherein the plurality of load statistics periods comprise 4 milliseconds, 8 milliseconds, 12 milliseconds, 16 milliseconds, and 20 milliseconds; and

determining a load statistics period corresponding to a power consumption value having a highest matching degree with the first difference in the plurality of power consumption values that are in one-to-one correspondence with the plurality of load statistics periods as the frequency scaling period.

9. The method according to claim 8, wherein the determining, based on the frequency scaling frequency, a plurality of power consumption values that are in one-to-one correspondence with a plurality of load statistics periods comprises:

determining, based on an energy efficiency lookup table, N power consumption values that are in one-to-one correspondence with N frequencies, wherein the frequency scaling frequency comprises the N frequencies, the N frequencies are in one-to-one correspondence with N load samples comprised in the first historical load sequence, and a value of N is obtained by dividing duration of an operation corresponding to the first historical load sequence by a statistics period of the first historical load sequence; and
determining, based on the N power consumption values that are in one-to-one correspondence with the N frequencies, the plurality of power consumption values that are in one-to-one correspondence with the plurality of load statistics periods.

10. The method according to any one of claims 1 to 9, wherein the first operation comprises any one of an application start operation, a tap operation, a swipe operation, a window switching operation, and a code scanning operation.

11. An electronic device, wherein the electronic device comprises a memory and a processor, the memory is configured to store computer program code, and the processor is configured to execute the computer program code stored in the memory, to implement the method according to any one of claims 1 to 10.

12. A computer-readable storage medium, wherein the storage medium stores a program or instructions, and when the program or the instructions are run, the method according to any one of claims 1 to 10 is implemented.

13. A chip, comprising at least one processor, configured to execute a computer program or instructions in a memory, to implement the method according to any one of claims 1 to 10.

S101: A task enters a scheduler queue corresponding to a priority of the task based on the priority of the task

S102: Perform load calculation in a task execution process

S103: Perform frequency scaling based on a result of the load calculation

FIG. 1

FIG. 2

A normal process may adjust a priority by modifying a nice value: nice+120

| nice |
|------|
| −20 ... 19 |

A smaller value indicates a higher priority

Real-time process → | 0 ... 99 | 100 ... 139 | ← Normal process

Priority

Kernel scheduler → Stop scheduler, Deadline scheduler, RT scheduler, CFS scheduler, IDLE-Task scheduler

Deadline scheduler → SCHED_DEADLINE

RT scheduler → SCHED_RR → SCHED_FIFO

CFS scheduler → SCHED_NORMAL → SCHED_BATCH → SCHED_IDLE

S301: Identify a key operation of a user

S302: Increase a minimum CPU frequency to be greater than or equal to a first empirical value, and keep the minimum CPU frequency greater than or equal to the first empirical value in a first time period

S303: Restore free frequency scaling after the first time period expires

**FIG. 3**

```
<cnd id="4099" power="13205" name="app_start"
<action>
    <lit_cpu0_min_freq>1700000</lit_cpu0_min_freq>
    <mid_cpu0_min_freq>2343000</mid_cpu0_min_freq>
    <big_cpu0_min_freq>2631000</big_cpu0_min_freq>
</action>
```

**FIG. 4**

**Swipe scenario**

**FIG. 5**

S601: Obtain the ith load based on a CPU load state within the ith time period, where i=1, 2, 3, ..., and N, and both i and N are positive integers

S602: Perform calculation based on N loads, to obtain a CPU frequency required by a current task

S603: Perform CPU frequency scaling based on the CPU frequency required by the current task

FIG. 6

sum_history  | 3 | 3 | 4 | 7 | 5 | 6 | new

sum_history  | 3 | 4 | 7 | 5 | 6 |   | 5 | avg

p.ravg.demand=MAX(last,avg)=6

FIG. 7

A user performs a first operation

S801: Determine a frequency scaling period based on the $M^{th}$ historical load sequence and a first power consumption budget

S802: Collect statistics on a first load sequence corresponding to the first operation

S803: Determine a frequency scaling frequency based on the $M^{th}$ historical load sequence

S804: Perform frequency scaling based on the frequency scaling period and the frequency scaling frequency

FIG. 8

FIG. 9

A user performs a first operation

S1001: Perform resource reservation based on M historical load sequences

S1004: Collect statistics on a first load sequence corresponding to the first operation

S1005: Update M historical load sequences in real time

S1002: Separately calculate power consumption corresponding to five load statistics periods based on the $M^{th}$ historical load sequence

S1006: Determine a frequency scaling frequency based on the $M^{th}$ historical load sequence

S1003: Determine a frequency scaling period based on the power consumption corresponding to the five load statistics periods and a first power consumption budget

S1007: Perform frequency scaling based on the frequency scaling period and the frequency scaling frequency

FIG. 10

S1101: Record M historical load sequences, where each of the M historical load sequences includes N load samples

S1102: Calculate an average value of M×N load samples

S1103: Perform background load cleanup until (Average value of the M×N load samples+Current CPU load rate)<100%

Complete resource reservation

FIG. 11

S1201: Record M historical load sequences, where each of the M historical load sequences includes N load samples

S1202: Determine a largest value in M×N load samples

S1203: Perform background load cleanup until (Largest value in the M×N load samples+Current CPU load rate)<100%

Complete resource reservation

FIG. 12

S1301: Record M historical load sequences, where each of the M historical load sequences includes N load samples

S1303: Calculate a target total current, where Target total current=Cooling ability of a device×(Target temperature of the device–Environment temperature)

S1302: Separately calculate power consumption corresponding to five load statistics periods based on the M$^{th}$ historical load sequence

S1304: Calculate a value of Δ, where Δ=Target total current–Current total current

S1307: Determine power consumption having a highest matching degree with Δ in the power consumption corresponding to the five load statistics periods as a target power consumption budget value

Yes

S1305: Δ>0?

No

S1308: Determine a load statistics period corresponding to the target power consumption budget value as a frequency scaling period

S1306: Determine a frequency scaling period as 20 ms

FIG. 13

S1401: Record M historical load sequences, where each of the M historical load sequences includes N load samples

S1402: Separately calculate N frequencies that are in one-to-one correspondence with N load samples in the M$^{th}$ historical load sequence

S1403: Obtain N power consumption values that are in one-to-one correspondence with the N frequencies by looking up an energy efficiency table

S1404: Separately calculate power consumption in one-to-one correspondence with five load statistics periods based on the N power consumption values

FIG. 14

S1501: In response to a first operation performed by a user, collect statistics on a first load sequence

S1502: Remove, in a first-in first-out form, a historical load sequence ranked 1$^{st}$ from M historical load sequences, and use the first load sequence as a historical load sequence ranked M$^{th}$

Complete updating of the M historical load sequences

FIG. 15

FIG. 16

EP 4 647 914 A1

EP 4 647 914 A1

| Scenario sensing module 1710 | Tap | Application start | Window switch | Window swipe |
| | Code scanning | List swipe | ... | |

| Power consumption budget module 1730 | Load statistics collection and prediction module 1720 | Frequency scaling period determining unit 1721 |
| | | Load statistics collection unit 1722 |
| | | Load prediction unit 1723 |

| Resource reservation module 1740 | Frequency scaling module 1750 | Calculation unit 1751 |

FIG. 17

Apparatus 1800

Processor
1810

Memory
1830

Transceiver
1820

FIG. 18

## INTERNATIONAL SEARCH REPORT

| International application No. |
|---|
| **PCT/CN2024/078230** |

**A. CLASSIFICATION OF SUBJECT MATTER**

G06F 9/50(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS: CNTXT; DWPI; VEN; USTXT; WOTXT; EPTXT; CNKI: 处理器, 调整, 频率, 历史, 负载, 操作, 事件, 统计, 周期, 功耗, 预测, CPU, adjust, frequency, history, load, operation, event, stat, period, power consumption, prediction

**C. DOCUMENTS CONSIDERED TO BE RELEVANT**

| Category* | Citation of document, with indication, where appropriate, of the relevant passages | Relevant to claim No. |
|---|---|---|
| A | CN 114968546 A (HUAWEI TECHNOLOGIES CO., LTD.) 30 August 2022 (2022-08-30) description, paragraphs 80-176 | 1-13 |
| A | CN 112912820 A (HUAWEI TECHNOLOGIES CO., LTD.) 04 June 2021 (2021-06-04) description, paragraphs 46-66 | 1-13 |
| A | US 8281160 B1 (MARVELL INTERNATIONAL LTD.) 02 October 2012 (2012-10-02) entire document | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **24 May 2024** | **04 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/078230**

| Patent document cited in search report | | | Publication date (day/month/year) | Patent family member(s) | | | Publication date (day/month/year) |
|---|---|---|---|---|---|---|---|
| CN | 114968546 | A | 30 August 2022 | None | | | |
| CN | 112912820 | A | 04 June 2021 | US | 2021224119 | A1 | 22 July 2021 |
| | | | | WO | 2020082757 | A1 | 30 April 2020 |
| US | 8281160 | B1 | 02 October 2012 | US | 8578188 | B1 | 05 November 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310603723X